# EUROPÄISCHE PATENTSCHRIFT

(11) **EP 2 501 566 B1**
(45) Veröffentlichungstag und Bekanntmachung des Hinweises auf die Patenterteilung: **04.06.2014**
(21) Anmeldenummer: 10759625.6
(22) Anmeldetag: 27.09.2010
(51) Int. Cl.: B60C 23/04

(54) **VERFAHREN ZUR DETEKTIEREN EINES VON EINER REIFENINNENSEITE LOSGELÖSTEN REIFENMODULS FÜR FAHRZEUGE**
METHOD FOR DETECTING A TIRE MODULE DETACHED FROM THE INNER FACE OF A TIRE FOR VEHICLES
PROCÉDÉ POUR DÉTECTER UN MODULE DE PNEUMATIQUE DÉTACHÉ D'UN CÔTÉ INTÉRIEUR DE PNEUMATIQUE POUR DES VÉHICULES

(30) Priorität: 18.11.2009 DE 102009044573
(43) Veröffentlichungstag der Anmeldung: 26.09.2012
(73) Patentinhaber: Continental Reifen Deutschland GmbH, 30165 Hannover (DE)
(72) Erfinder: HANNA, Jörg, 32289 Rödinghausen (DE)
(74) Vertreter: Finger, Karsten
(86) Internationale Anmeldenummer: PCT/EP2010/064203
(87) Internationale Veröffentlichungsnummer: WO 2011/060986

(56) Entgegenhaltungen:
- EP-A1- 2 085 254
- WO-A2-2005/056311
- DE-A1- 10 137 591
- DE-A1-102004 064 002
- DE-A1-102005 006 904
- US-A1- 2004 206 167

## Beschreibung

Die Erfindung betrifft ein Verfahren zum Detektieren eines von einer Reifeninnenseite losgelösten Reifenmoduls für Fahrzeuge.

Mit Transpondern versehene Reifenmodule werden im Reifen, insb. bei Reifensensoren für LKW-Reifen, für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben sind in der Regel eine Luftdrucküberwachung, eine Temperaturmessung oder die Messung von mechanischen Spannungszuständen im Reifen. Moderne Transponder bestehen aus einem Elektronikbauteil bzw. -Chip, in dem Sensorelemente angeordnet sein können sowie aus einer an dieses Elektronikbauteil angeschlossenen Antenne. Ein Beispiel für einen solchen Transponder offenbart die DE 102 43 441 A1.

Bei bisherigen Systemen werden die Sensoren mit einem Spannband auf die Felge geschraubt, oder am Ventilsitz befestigt.
Ein Sensormodul, welches an der Felge angeordnet ist, kann den Reifen auf seiner Innenseite beschädigen, wenn er sich aus seiner Halterung löst und unkontrolliert im Reifen liegt. Manchmal funktioniert die Elektronik des Sensors trotz der großen auftretenden Beschleunigungen noch eine ganze Zeit und dem Fahrer wird für diesen Reifen auch noch ein Messwert angezeigt. Dennoch können durch scharfe Kanten bereits Beschädigungen im Reifen entstehen, ohne dass der Fehler von Außen zu bemerken ist.

Die neuen Sensormodule zur Reifendrucküberwachung werden auf der Reifeninnenseite in den Reifen geklebt. Dadurch sind diese Reifenmodule größeren Beanspruchungen ausgesetzt als das bei den Radmodulen der Fall ist, die mit einem Stahlband an der Felge montiert oder am Ventilsitz befestigt sind. Die Gefahr des Loslösens der Reifenmodule von der Reifeninnenseite kann bei dieser Art der Befestigung von Sensormodulen höher sein. Daher ist es wichtig, ein losgelöstes Reifenmodul möglichst frühzeitig zu erkennen. Die DE 10 2004 064002 A1, WO 2005/056311 A2, US 2004/206167 A1 und
EP 2 085 254 A1 offenbaren bekannte Vorrichtungen zum Detektieren eines defekten oder losgelösten Reifenmoduls.

Der Erfindung lag die Aufgabe zugrunde, ein Verfahren bereitzustellen, mit dem auf einfache Weise das Ablösen eines Reifenmodules von der Reifeninnenseite überwacht und detektiert wird.

Gelöst wird die Aufgabe durch ein Verfahren nach Anspruch 1.

Ein Vorteil der Erfindung ist insbesondere darin zu sehen, dass durch das erfindungsgemäße Verfahren auf einfache Weise das Ablösen eines Reifenmodules von der Reifeninnenseite sicher detektiert wird und anschließend der Fahrzeughalter eine entsprechende Warnmeldung erhält.
Das frühzeitige Erkennen eines losgelösten Reifenmoduls im Reifen kann einerseits einen partiellen Ausfall der Reifendrucküberwachung verhindern, denn früher oder später würde das Reifenmodul unbeabsichtigt zerstört und kann keine Reifeninformationen mehr senden. Andererseits wird auch die Gefahr verringert, dass ein losgelöstes Reifenmodul mittelfristig den Reifen irreversibel beschädigt. Entscheidend ist bei diesem Verfahren, insbesondere dass die Analyse der Beschleunigungswerte bei der Beschleunigung des Fahrzeuges in der Anfahrphase oder bei konstanten niedrigen Geschwindigkeiten des Fahrzeuges erfolgt. Insbesondere in der Anfahrphase lassen sich die Beschleunigungswerte bei einem losgelösten Reifenmodul sicher von den Beschleunigungswerten unterscheiden, die bei einem festmontierten Reifenmodul vorliegen.

In einer vorteilhaften Weiterbildung der Erfindung ist vorgesehen, dass das bei der Analyse der Beschleunigungswerte der einzelnen Reifenmodule des Fahrzeuges in der Auswerteeinheit ein Vergleich zwischen den Beschleunigungswerten der einzelnen Reifenmodule erfolgt, wobei bei einer statistisch signifikanten Standardabweichung bei einem der Beschleunigungswerte der Reifenmodule ein im Reifenhohlraum frei taumelndes Reifenmodul detektiert und anschließend ein Warnsignal aktiviert wird.
Die Bewertung der Beschleunigungswerte sollte vorzugsweise im Steuergerät des TPMS erfolgen. Diese Ausführung hat insb. den technischen Vorteil, dass im Steuergerät i.a. mehr Rechenleistung und Speicherplatz zur Verfügung steht, um eine umfangreiche Auswertung durchzuführen. Außerdem verwaltet das Steuergerät alle Reifenmodule und kann dadurch die Beschleunigungswerte untereinander vergleichen, so dass eine Anomalie bei einem einzelnen Reifenmodul schneller und sicherer erkannt werden kann.

In einer weiteren vorteilhaften Weiterbildung der Erfindung ist vorgesehen, dass die Auswerteeinheit zur Analyse der Beschleunigungswerte in einem zentralen Steuergerät des Fahrzeuges angeordnet ist, wobei das Steuergerät alle Signale der einzelnen Reifenmodule des Fahrzeuges empfängt und auswertet. Das Reifendrucküberwachungssystem umfasst im Allgemeinen ein zentrales Steuergerät, welches im Fahrzeug angeordnet ist und alle Signale der einzelnen Reifenmodule empfängt und auswertet. Das Steuergerät lässt sich einfach dafür einsetzen, die Beschleunigungswerte nach einem bestimmten Algorithmus zu analysieren.

Es ist vorgesehen, dass die Auswerteeinheit zur Analyse der Beschleunigungswerte im jeweiligen Reifenmodul angeordnet ist, wobei jedes Reifenmodul die eigenen Beschleunigungswerte analysiert und bei einer statistisch signifikanten Abweichung ein Warnsignal aktiviert wird. Sofern das Fahrzeug über kein zentrales Steuergerät verfügt, ließe sich die Auswerteeinheit im Reifenmodul selber anordnen. Ein losgelöstes Reifenmodul würde sodann durch eine interne Auswertung der Beschleunigungswerte erfolgen.

In einer weiteren vorteilhaften Weiterbildung der Erfindung ist vorgesehen, dass das Warnsignal im Zusammenhang mit einem losgelösten Reifenmodul, bei einer Anordnung der Auswerteeinheit im Reifenmodul, auf einem Betriebshof an ein Handlesegerät übermittelt wird, wobei anschließend eine Warnmeldung am Handlesegerät erfolgt. Bei Betriebshöfen für Nutzfahrzeuge würde dann ein entsprechender Mitarbeiter mit dem Handlesegerät jeden Fahrzeugreifen manuell überprüfen, in dem er das Handlesegerät an den entsprechenden Fahrzeugreifen hält. Eine entsprechende Fehlermeldung, die ein losgelöstes Reifenmodul anzeigt, würde dann umgehend am Handlesegerät angezeigt werden.

In einer weiteren vorteilhaften Weiterbildung der Erfindung ist vorgesehen, dass das Warnsignal im Zusammenhang mit einem losgelösten Reifenmodul, bei einer Anordnung der Auswerteeinheit im Reifenmodul, auf eine im Betriebshof im Boden eingelassene Ausleseantenne übermittelt wird, wobei anschließend eine Warnmeldung erfolgt. Dadurch ließen sich die Daten auf den Reifenmodulen auf einfache Weise auslesen.

In einer weiteren vorteilhaften Weiterbildung der Erfindung ist vorgesehen, dass bei der Analyse der Beschleunigungswerte die Mittelwerte über ein vorgegebenes Zeitfenster ausgewertet und miteinander verglichen werden, wobei bei einer signifikanten Abweichung ein von der Reifeninnenseite abgelöstes Reifenmodul detektiert wird. Die Mittelwerte der Beschleunigungswerte stellen ebenfalls geeignete Messwerte dar, mit denen sich auf einfache Weise ein losgelöstes Reifenmodul detektieren lässt.

An einem Ausführungsbeispiel soll die Erfindung nachfolgend erläutert werden. Es zeigt:

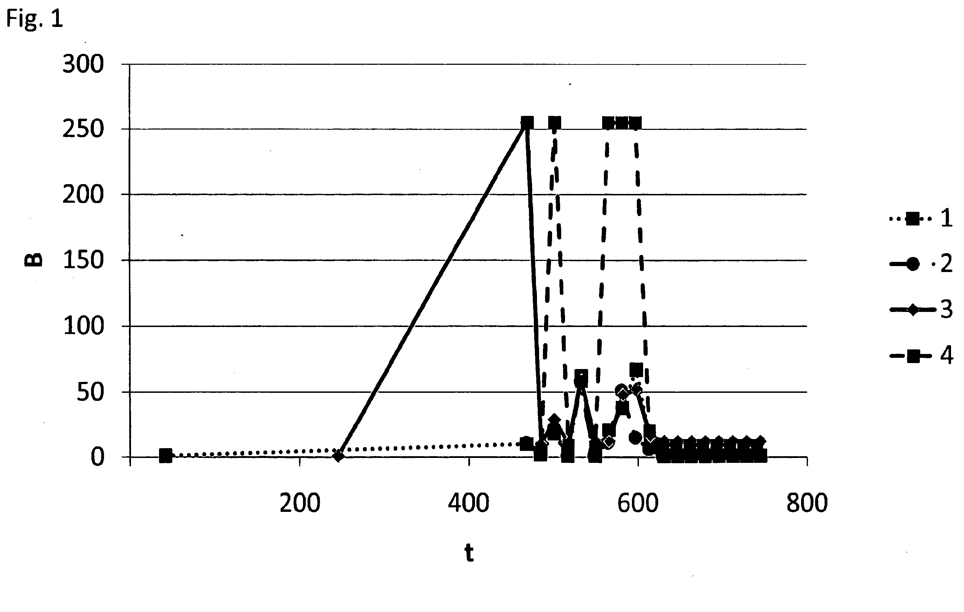

Fig. 1 zeigt ein Diagramm, in dem gemessene Beschleunigungswerte von Reifenmodulen dargestellt sind.

Fig. 1 zeigt ein Diagramm, in dem Messwerte von unterschiedlichen Reifenmodulen dargestellt sind. Auf der Abszisse sind die Beschleunigungswerte B in Byte aufgetragen, wobei der Wert 250 den maximalen Beschleunigungswert angibt, der mit dem Beschleunigungsaufnehmer im Reifenmodul gemessen werden kann. Auf der Ordinate ist die Fahrzeit t in Sekunden aufgetragen. Bei den Messwerten handelt es sich um Beschleunigungswerte, die bei Reifenmodulen in Nutzfahrzeugreifen bei einem fahrenden LKW gemessen worden sind.

Bei einem fest montierten Reifenmodul ist der Verlauf der Zentrifugalbeschleunigungswerte dergestalt, dass sie sich während der Beschleunigungsphase des Fahrzeugs stetig erhöhen. Die Kurvenverläufe 1 und 2 zeigen einen entsprechenden Messwerteverlauf bei einem fest auf der Reifeninnenseite montierten Reifenmodul. Die Kurvenverläufe 3 und 4 zeigen solche stark schwankenden Messwerte, bei denen das Reifenmodul sich von der Reifeninnenseite gelöst hat und frei im Reifenhohlraum taumelt. Nur bei den Kurvenverläufen 3 und 4 werden Beschleunigungswerte von 250 Byte in der Anfahrphase des Fahrzeugs gemessen, also in der Fahrtzeit t bis zu ca. 600 s. Die extrem große Schwankung der Messwerte bei den Kurvenverläufen 3 und 4 lassen sicher auf ein losgelöstes Reifenmodul schließen. Bei konstanter Fahrt werden hingegen gleichbleibende Werte gemessen. Im Gegensatz dazu werden bei einem lose im Reifen taumelnden Reifenmodul, insbesondere in der Anfahrphase und bei konstanten niedrigen Geschwindigkeiten des Fahrzeuges von kleiner als ca. 50 km/h sehr stark schwankende Messwerte gemessen. Durch eine statistische Auswertung der Beschleunigungswerte kann die korrekte Befestigung des Reifenmoduls überwacht werden, da die zu erwartenden Messwerte bei einem festen Sitz des Reifenmoduls auf der Reifeninnenseite bekannt sind.

Ein geeignetes Mittel zur statistischen Auswertung ist z.B. die Betrachtung der Standardabweichung der Messwerte über einen vorgegebenen Zeitraum.

### Bezugszichenliste

1 Verlauf der Beschleunigungswerte eines fest auf der Reifeninnenseite montierten Reifenmodules
2 Verlauf der Beschleunigungswerte eines fest auf der Reifeninnenseite montierten Reifenmodules
3 Verlauf der Beschleunigungswerte eines losgelösten Reifenmodules
4 Verlauf der Beschleunigungswerte eines losgelösten Reifenmodules

## Patentansprüche

1. Verfahren zum Detektieren eines von einer Reifeninnenseite losgelösten Reifenmoduls für Fahrzeuge mit folgenden Schritten:
a) Messung der auf ein Reifenmodul einwirkenden Zentrifugalbeschleunigung mit einem im Reifenmodul angeordneten Beschleunigungsaufnehmer,
b) Weiterleitung der gemessenen Beschleunigungswerte an eine Auswerteeinheit,
c)Analyse der Beschleunigungswerte bei der Beschleunigung des Fahrzeuges in der Anfahrphase oder bei konstanten niedrigen Geschwindigkeiten des Fahrzeuges,
d)Aktivierung eines Warnsignals in der Auswerteeinheit, sofern die Analyse der Beschleunigungswerte (3, 4) eine statistisch signifikante Standardabweichung im Vergleich zu einem nicht von der Reifeninnenseite abgelösten Reifenmodul (1, 2) ergibt, wodurch ein im Reifenhohlraum frei taumelndes Reifenmodul detektiert wird, wobei die Auswerteeinheit zur Analyse der Beschleunigungswerte im jeweiligen Reifenmodul angeordnet ist, wobei jedes Reifenmodul die eigenen Beschleunigungswerte analysiert und bei einer statistisch signifikanten Abweichung ein Warnsignal aktiviert wird,
e) Ausgabe eines Warnsignals an den Fahrzeughalter, die dem Fahrzeughalter das von der Reifeninnenseite losgelöste Reifenmodul anzeigt und dem Fahrzeughalter eine Anweisung gibt, die Fahrzeugräder von einer Werkstatt überprüfen zu lassen.

2. Verfahren nach Anspruch 1,
**dadurch gekennzeichnet, dass**
bei der Analyse der Beschleunigungswerte der einzelnen Reifenmodule des Fahrzeuges in der Auswerteeinheit ein Vergleich zwischen den Beschleunigungswerten der einzelnen Reifenmodule erfolgt, wobei bei einer statistisch signifikanten Standardabweichung bei einem der Beschleunigungswerte der Reifenmodule ein im Reifenhohlraum frei taumelndes Reifenmodul detektiert und anschließend ein Warnsignal aktiviert wird.

3. Verfahren nach einem der vorhergehenden Ansprüche,
**dadurch gekennzeichnet, dass**
die Auswerteeinheit zur Analyse der Beschleunigungswerte in einem zentralen Steuergerät des Fahrzeuges angeordnet ist, wobei das Steuergerät alle Signale der einzelnen Reifenmodule des Fahrzeuges empfängt und auswertet.

4. Verfahren nach einem der vorhergehenden Ansprüche,
**dadurch gekennzeichnet, dass**
das Warnsignal im Zusammenhang mit einem losgelösten Reifenmodul, bei einer Anordnung der Auswerteeinheit im Reifenmodul, auf einem Betriebshof an ein Handlesegerät übermittelt wird, wobei anschließend eine Warnmeldung am Handlesegerät erfolgt.

5. Verfahren nach einem der vorhergehenden Ansprüche,
**dadurch gekennzeichnet, dass**
das Warnsignal im Zusammenhang mit einem losgelösten Reifenmodul, bei einer Anordnung der Auswerteeinheit im Reifenmodul, auf eine im Betriebshof im Boden eingelassene Ausleseantenne übermittelt wird, wobei anschließend eine Warnmeldung erfolgt.

6. Verfahren nach einem der vorhergehenden Ansprüche,
**dadurch gekennzeichnet, dass**
bei der Analyse der Beschleunigungswerte die Mittelwerte über ein vorgegebenes Zeitfenster ausgewertet und miteinander verglichen werden, wobei bei einer signifikanten Abweichung ein von der Reifeninnenseite abgelöstes Reifenmodul detektiert wird.

## Claims

1. Method for detecting a tire module, detached from the inner face of a tire, for vehicles, having the following steps:
a) measuring the centrifugal acceleration acting on a tire module, with an acceleration pickup arranged in the tire module,
b) passing on the measured acceleration values to an evaluation unit,
c) analyzing the acceleration values during the acceleration of the vehicle in the starting phase or at constant low speeds of the vehicle,
d) activation of a warning signal in the evaluation unit if the analysis of the acceleration values (3, 4) reveals a statistically significant standard deviation compared to a tire module (1, 2) which is not detached from the inner face of the tire, as a result of which a tire module which is tumbling freely in the cavity of the tire is detected, wherein the evaluation unit for analyzing the acceleration values is arranged in the respective tire module, wherein each tire module analyzes its own acceleration values and a warning signal is activated in the event of a statistically significant deviation, and
e) outputting of a warning signal to the keeper of the vehicle, which indicates to the keeper of the vehicle that the tire module is detached from the inner face of the tire and instructs the keeper of the vehicle to have the vehicle wheels checked by a workshop.

2. Method according to Claim 1,
**characterized in that**
during the analysis of the acceleration values of the individual tire modules of the vehicle in the evaluation unit a comparison is carried out between the acceleration values of the individual tire modules, wherein in the case of a statistically significant standard deviation of one of the acceleration values of the tire modules a tire module which is tumbling freely in the cavity of the tire is detected and a warning signal is subsequently activated.

3. Method according to one of the preceding claims,
**characterized in that**
the evaluation unit for analyzing the acceleration values is arranged in a central control unit of the vehicle, wherein the control unit receives and evaluates all the signals of the individual tire modules of the vehicle.

4. Method according to one of the preceding claims,
**characterized in that**
the warning signal is transmitted to a handheld reading device at a maintenance and storage facility when, in the context of a detached tire module, the evaluation unit is arranged in the tire module, wherein a warning message is subsequently issued at the handheld reading device.

5. Method according to one of the preceding claims,
**characterized in that**
the warning signal is transmitted to a reading antenna which is let into the floor at the maintenance and storage facility when, in the context of a detached tire module, the evaluation unit is arranged in the tire module, wherein a warning message is subsequently issued.

6. Method according to one of the preceding claims,
**characterized in that**
during the analysis of the acceleration values, the mean values are evaluated by means of a predefined time window and compared with one another, wherein given a significant deviation, a tire module which is detached from the inner face of the tire is detected.

## Revendications

1. Procédé de détection de la séparation d'un module de bandage de roue vis-à-vis du côté intérieur du bandage de roue de véhicule, le procédé présentant les étapes suivantes :
a) à l'aide d'un enregistreur d'accélération disposé dans le module de bandage de roue, mesure de l'accélération centrifuge qui agit sur un module de bandage de roue,
b) envoi des valeurs d'accélération mesurées à une unité d'évaluation,
c) analyse des valeurs d'accélération lors de l'accélération du véhicule dans une phase de démarrage ou à une vitesse basse constante du véhicule,
d) activation d'un signal d'avertissement dans l'unité d'évaluation si l'analyse des valeurs d'accélération (3, 4) indique la présence d'un écart-type statistiquement significatif par rapport à un module (1, 2) de bandage de roue non séparé du côté intérieur du bandage de roue, ce qui permet de détecter qu'un module de bandage de roue se déplace librement dans la cavité du bandage de roue, l'unité d'évaluation assurant l'analyse des valeurs d'accélération étant disposée dans le module de bandage de roue concerné, chaque module de bandage de roue analysant ses propres valeurs d'accélération et un signal d'avertissement étant activé en cas d'écart statistiquement significatif,
e) envoi au possesseur du véhicule d'un signal d'avertissement qui indique au possesseur du véhicule qu'un module de bandage de roue s'est séparé du côté intérieur du bandage de roue et qui donne au possesseur du véhicule l'indication de faire vérifier les roues de son véhicule dans un atelier.

2. Procédé selon la revendication 1, **caractérisé en ce que** dans l'analyse des valeurs d'accélération des différents modules de bandage de roue du véhicule dans l'unité d'évaluation, une comparaison entre les valeurs d'accélération des différents modules de bandage de roue a lieu, un module de bandage de roue se déplaçant librement dans la cavité du bandage de roue étant détecté en cas d'écart-type statistiquement significatif d'une des valeurs d'accélération des modules de bandage de roue, un signal d'avertissement étant ensuite activé.

3. Procédé selon l'une des revendications précédentes, **caractérisé en ce que** pour l'analyse des valeurs d'accélération, l'unité d'évaluation est disposée dans un appareil central de commande du véhicule, l'appareil de commande recevant et évaluant tous les signaux des différents modules de bandage de roue du véhicule.

4. Procédé selon l'une des revendications précédentes, **caractérisé en ce que** lorsque l'unité d'évaluation est disposée dans le module de bandage de roue, le signal d'avertissement associé à la séparation d'un module de bandage de roue est transmis à un appareil manuel de lecture dans l'atelier d'un garage, un message d'avertissement étant ensuite émis sur l'appareil manuel de lecture.

5. Procédé selon l'une des revendications précédentes, **caractérisé en ce que** lorsque l'unité d'évaluation est disposée dans le module de bandage de roue, le signal d'avertissement associé à la séparation d'un module de bandage de roue est transmis à une antenne de lecture placée dans le sol de l'atelier d'un garage, un message d'avertissement étant ensuite émis.

6. Procédé selon l'une des revendications précédentes, **caractérisé en ce que** dans l'analyse des valeurs d'accélération, les valeurs moyennes sont évaluées sur une fenêtre temporelle prédéterminée et sont comparées les unes aux autres, la séparation d'un module de bandage de roue du côté intérieur du bandage de roue étant détectée en cas d'écart significatif.
